# EUROPÄISCHE PATENTANMELDUNG

(11) **EP 1 380 543 A1**
(43) Veröffentlichungstag der Anmeldung: **14.01.2004**
(21) Anmeldenummer: 02015220.3
(22) Anmeldetag: 09.07.2002
(51) Int. Cl.: C02F 1/467

(54) **Wasseraufbereitungsanlage zur Erzeugung von trinkbarem Wasser**

(71) Anmelder: Galambodi, Attila, 65936 Frankfurt (DE); Freibott, Manfred, 42549 Velbert (DE); Rebscher, Hartmut, 64743 Beerfelden (DE)
(72) Erfinder: Galambodi, Attila, 65936 Frankfurt (DE); Freibott, Manfred, 42549 Velbert (DE); Rebscher, Hartmut, 64743 Beerfelden (DE)

(57) **Zusammenfassung**

Die Erfindung bezieht sich auf eine Wasseraufbereitungsanlage zur Erzeugung von trinkbarem Wasser aus verschmutztem Rohwasser, mit einem Zulauf für das Rohwasser, mit einer Filtrationsanlage bestehend aus mehreren Filterstufen und mit einem Ablauf für das aufbereitete Wasser, wobei das aufzubereitende Wasser über Saug- und Druckpumpen gefördert wird.

## Beschreibung

Die Erfindung bezieht sich auf eine Wasseraufbereitungsanlage zur Erzeugung von trinkbarem Wasser aus verschmutztem Rohwasser, mit einem Zulauf für das Rohwasser, mit einer Filtrationsanlage bestehend aus mehreren Filterstufen und mit einem Ablauf für das aufbereitete Wasser, wobei das aufzubereitende Wasser über Saug- und Druckpumpen gefördert wird.

Überall dort wo sofort trinkbares Wasser erforderlich wird wie u.a. bei diversen Katastrophenfälle wie Erdbeben, Kriege, Überschwemmungen, Brände, dort wo das Trinkwassemetz beschädigt wurde, oder auch keines vorhanden ist kommt eine derartige Trinkwasser-Aufbereitungsanlage zum Einsatz.

Um aber schnelles trinkbares Wasser vor Ort aus Oberflächengewässer wie Flüsse, Seen oder auch aus Brunnenwasser zu produzieren war bisher nur mit Techniken zu realisieren welche den Einsatz von Chemikalien wie beispielsweise Chlorgas oder Hypochlorid, spezielle osmotische Filtration, u.a. voraussetzte.
Bei diesen Verfahren wird zwar das Wasser auch gereinigt und entkeimt aber auch alle lebensnotwendigen Substanzen aus dem Wasser herausgefiltert bzw. eliminiert Das Wasser ist in diesem Zustand nicht mehr genießbar.
Erst durch etliche Chemiezusatzmittel kann dann das zuvor entmineralisierte und entkeimte Wasser wieder aufbereitet, mineralisiert und pH-neutral hergestellt werden. Mit Hilfe von Chemikalieneinsatz ist das Wasser dann wieder genießbar.

Der pH-Wert ist ein Maß für die Menge an Wasserstoffionen die in einem Liter Wasser effektiv vorhanden sind. Je geringer der pH-Wert ist bzw. je stärker er vom Neutralwert 7,0 nach unten abweicht, desto saurer ist das Wasser. Umso mehr basische oder alkalische Mittel sowie Mineralien müssen dann wieder dem Wasser bis zum Neutralwert zugeführt werden, um es wieder genießbar zumachen.

Für die dezentrale Trinkwasser-Versorgung vor Ort werden zudem umfangreiche Anlagenteile benötigt, die eine nicht unbeträchtliche Flächengröße beansprucht.
Man benötigt in der Regel drei bis vier Sammel- und Absetzbecken mit einem entsprechenden Fassungsvolumen, welche sich je nach dem stündlichen Wasserbedarf der zu versorgenden Stelle richtet. Des weiteren wird eine Filtrationsanlage, eine Saug- und Förderpumpe zur Füllung der Wassertanks, eine weitere Saug und Druckerhöhungspumpe zur Versorgung der Verbraucherzapfstellen, eine Chlorgasdesinfektionsstation und eine Aktivkohlefilteranlage benötigt.

Außerdem ist der Personalaufwand zur Bedienung der Anlage mit mindestens 4 Personen zu rechnen. Hier ist die ständige Kontrolle der Chlorgasdosierung notwendig und damit wenigstens eine autorisierte Person zur Beaufsichtigung zwingend notwendig. Außerdem ist die nicht ungefährliche Handhabung (Bedienung) der Chlorgasdosierung zu berücksichtigen.

Aufgabe der Erfindung ist es, eine Wasseraufbereitungsanlage zu schaffen, die bei geringem Bauaufwand das Rohwasser bis zur Trinkwasserqualität reinigt, ohne dass hierfür Chemikalien benötigt werden. Die Anlage versorgt sich selbst. Die zur Behandlung des Rohwassers notwendigen Reinigungs- und Desinfektionsflüssigkeiten werden in der Anlage selbst während der Aufbereitung erzeugt

Gemäß der Erfindung wird die Aufgabe dadurch gelöst,
dass der Wasseraufbereitungsanlage, eine Diaphragmalysezelle, Reaktor genannt, zur Erzeugung der Behandlungsflüssigkeiten Anolyt und Katholyt zugeordnet ist,
dass nach der ersten Filterstufe dem Rohwasser die in dem Reaktor erzeugte alkalische Katholytlösung dosiert zugeführt wird,
dass nach der zweiten Filterstufe dem Rohwasser die in dem Reaktor erzeugte saure Anolytlösung, zur Desinfektion, dosiert zugeführt wird,
dass in der Anlage ein Mischbehälter vorgesehen ist, in dem das für die Behandlungsflüssigkeiten notwendige Wasser mit einer gesättigten Solelösung im Gegenstrom vermischt wird
und dass der Reaktor aus einer Kathode, einer Anode und einem Diaphragma (Membrane) besteht, derart, dass durch die zwei hermetisch voneinander getrennten Kammem ein Gemisch aus Salz (NaCI) und Wasser (H20) als Sole fließt.

Eine äußerst umweltfreundliche Desinfektionsmethode stellt die elektrochemische Aktivierung, genannt ECA dar. Hier wird die salzhaltige Lösung, Sole genannt (NaCI Natriumchlorid oder Na Natriumsulfid) elektrochemisch in einem Reaktor aktiviert.

Die elektrochemische Aktivierung ECA ist ein wissenschaftliches technisches Verfahren bei dem Flüssigkeiten in einen metastabilen bzw. einem instabilen Zustand versetzt werden.

ECA ist der Prozeß bei der eine Lösung oder Flüssigkeit in einer Kammer mit Hilfe eines an Elektroden angelegten Gleichstromes eine entsprechende Veränderung seiner Eigenschaften hinsichtlich der physikalisch chemischen Reaktionen erfährt. Elektrochemisch bedeutet also, dass die Produkte durch eine spezielle Elektrolyse entstehen.

Im Gegensatz zur Elektrolyse die den Gesamtumsatz eines Stoffes oder Lösung bewirkt, ist der Hauptzweck der ECA die Änderung der physikalisch chemischen Eigenschaften und die schnelle Reaktionsfähigkeit der Flüssigkeiten.

Der Aufbau einer solchen speziellen Elektrolysezelle, auch Reaktor genannt, besteht aus einer Kammer in welcher wie bei der Elektrolyse sich jeweils auf der gegenüberliegenden Seite zwei Elektroden angeordnet sind, eine positive Elektrode, die Anode 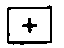 und eine negative Elektrode, die Kathode 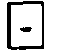 .
Zwischen beiden Elektroden ist eine flüssigkeitsundurchlässige Scheidewand, ein Diaphragma, eingebaut.

Dieses Modul wird auch Membranelekrolyse- oder Diaphragmalysezelle genannt. Es findet hier kein Flüssigkeitsaustausch oder Durchmischung der Flüssigkeiten aus der Anoden- oder Kathodekammer statt, sondern nur einen lonenaustausch.

Eine lonenwanderung also, d.h. es werden durch das Anlegen von Gleichstrom in der salzhaltigen Flüssigkeit Anionen und Kationen gebildet Durch das Anlegen einer bestimmten Spannung kommt eine entsprechende Stromstärke zustande, die sich nach der Konzentration der Salz- oder Solelösung richtet. Die hier zur Anwendung kommende Lösung ist ein Salz-Wassergemisch ein Natriumchlorid Wassergemisch. Durch Stromzugabe beginnt sich die Lösung in Anionen und Kationen aufzuspalten. Die negativ geladene Ionen die Kationen, wandern durch das Diaphragma (Scheidewand) hindurch zur Anode und die positiv geladene lonen, die Anionen, umgekehrt, wandern zur Kathode.

Der Einsatz dieser vorgenannten Anolyt und Katholytlösungen umfasst ein großes Spektrum in der Wasseraufbereitung speziell in der Industrie, Haustechnik, Schwimmbad, Veterinärmedizin u.a.. Gerade da, wo die Notwendigkeit der Reinigung, Desinfektion, Sterilisation von Wasser besteht.

Der große Vorteil dieser Technologie gegenüber anderen herkömmlichen Verfahren sind in der Minderung der Chemikalieneinsätzen zu sehen, dem ungefährlichen Handling der Verfahrensweise (ohne Chlorgas u. dergleichen!), Erzeugung von metastabilen Lösungen, die die vier weltweit stärksten Oxidanten enthalten. Das ist der Sauerstoff, das Chlor, Ozon und das Hydrogen-dioxid. Man behandelt damit das Wasser nicht wie bisher nur mit einem Kampfstoff, sondern mit den vorgenannten vier Stoffe gleichzeitig!

Diese Anolyt- und Katholytlösungen und speziell die saure Anolytlösung besitzen diese vier leistungsstärksten Oxidanten, Sauerstoff-, Chlor-, Ozon- und Hydrogendioxid - Radikale, die alle gegen unterschiedliche Erreger wirken.

Das gleichzeitige Zusammenwirken aller vier Oxidanten bewirkt das schnelle Vernichten aller bekannten Erreger.

Darin liegt auch die Begründung, weshalb die Konzentration dieser Lösung so gering sein kann bei gleichzeitig weitaus höherer Wirksamkeit gegenüber den anderen Entkeimungsverfahren, bei denen nur mit einem Oxidanten bzw. Kampfstoff gearbeitet wird (wie z.B. nur mit Chlor oder Ozon).

Der größte Anteil der Anolytlösung besteht aus instabilen Oxidationsverbindungen. Sie lösen sich nach 8 - 14 Tagen kpit. auf, d.h. sie gehen in Ihre ursprüngliche Zusammensetzung wieder zurück, nämlich in Salz und Wasser. Selbst bei Aufnahme dieser Verbindungen in den Körper sind sie nicht dauerhaft genug und in der Dosierung zu gering, um Irritationen im Körper hervorrufen zukönnen.

Es ist erwiesen, dass Anolyt- und Katholytlösungen sich vollkommen biologisch wieder abbauen.

Aus all diesen vorgenannten Sachverhalte, der Erkenntnis des unschädlichen und ungefährlichen Umganges mit diesen Lösungen, den Erhalt einer sauren Lösung zur Entkeimung und den Erhalt einer alkalischen Lösung zur Waschung, Reinigung wurde die mobile und stationäre Wasserbehandlungsanlage erfunden und entwickelt.

Die Unteransprüche beinhalten vorteilhafte Ausgestaltungen der Erfindung. Ein Ausführungsbeispiel der Erfindung ist in den Zeichnungen schematisch dargestellt

Es zeigt:

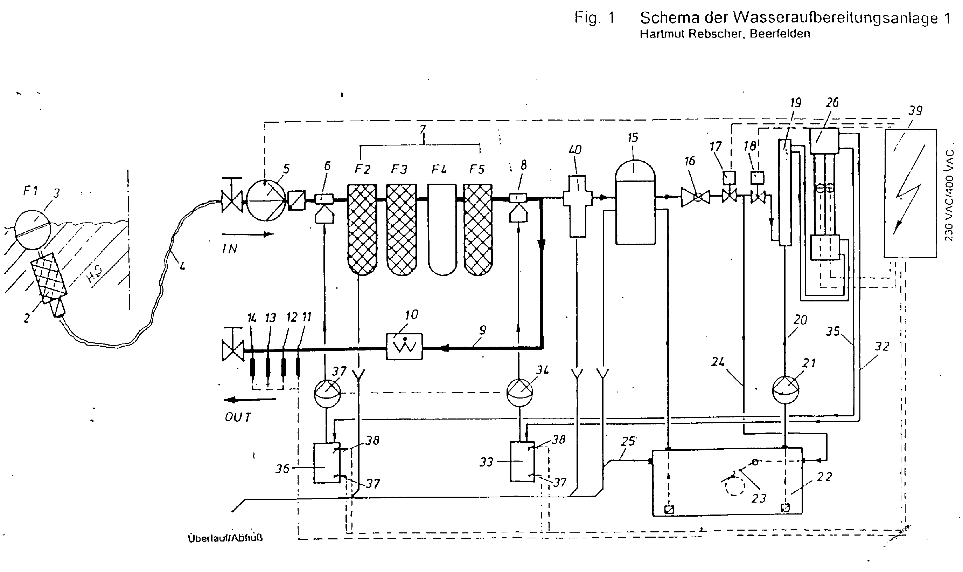

Fig 1, ein Schema der Wasseraufbereitungsanlage.
Fig 2 , ein Schema des Diaphragmalysemoduls, Reaktors

### Beschreibung:

Die Wasseraufbereitungsanlage 1 gemäß der Erfindung bezieht das aufzubereitende Rohwasser über eine erste Filterstufe dem Ansaugfilter 2 mit Schwimmerkugel 3 und einer Zuleitung 4 und führt dieses einer Saug- und Druckerhöhungspumpe 5 zu. Danach gelangt das Rohwasser zu einer Dosierstelle 6 , mittels der dem Rohwasser eine Katholytlösung zur Reinigung, Flockung und Schwermetallausfällung zugeführt wird. Nun gelangt das Rohwasser zu einer zweiten Filterstufe dem Filtrationsmodul 7 mit mehreren Filterstufen F2 bis F5. Nach der zweiten Filterstufe ist eine weitere Dosierstelle 8 vorgesehen, über die dem vorgefilterten Wasser eine Anolytlösung zur mikrobiologischen Aufbereitung und Desinfektion und somit zur Entfernung der schädlichen Bakterien und Viren zugeführt wird. Das gereinigte Wasser gelangt sodann über eine Rohrleitung 9, über einen Wassermesser 10 und über Kontrollsensoren wie beispielsweise mit Chlormesssonde 11, pH-Meßsonde 12 Redoxsonde 13 und Leitwertsonde 14 zum Verbraucher.

Über einen Rohrtrenner 40 wird sodann ein Wasseranteil einem lonenaustauscher 15 zur Entkalkung zugeführt. Danach gelangt der Wasseranteil über einen Druckminderer 16, Magnetventil 17 zum Abstellen der Wasserzufuhr und einem Strömungswächter 18 in einen Sole-Wasser-Mischbehälter 19.
Dieser erhält über eine Zuleitung 20 und eine Solepumpe 21 die benötigte Solemenge aus einem Solebehälter 22 mit vollgesättigter NaCl-Lösung. Im Solebehälter 22 ist ein mechanisches Füllventil 23 für den automatischen Wassemachlauf über die Leitung 24 und ein Überlauf 25 zum Überlauf des lonentauschers 15 vorgesehen.

Dem Sole-Wasser-Mischbehälter 19 ist eine Diaphragmalysezelle, Reaktor 26 genannt, zugeordnet, der zur Erzeugung von Anolyt- und Katholytlösungen vorgesehen ist. Der Reaktor 26 besteht aus einer Kammer 30,31 mit einer Kathodenelektrode 27, Anodenelektrode 28 und einem Diaphragma (Membrane) 29.

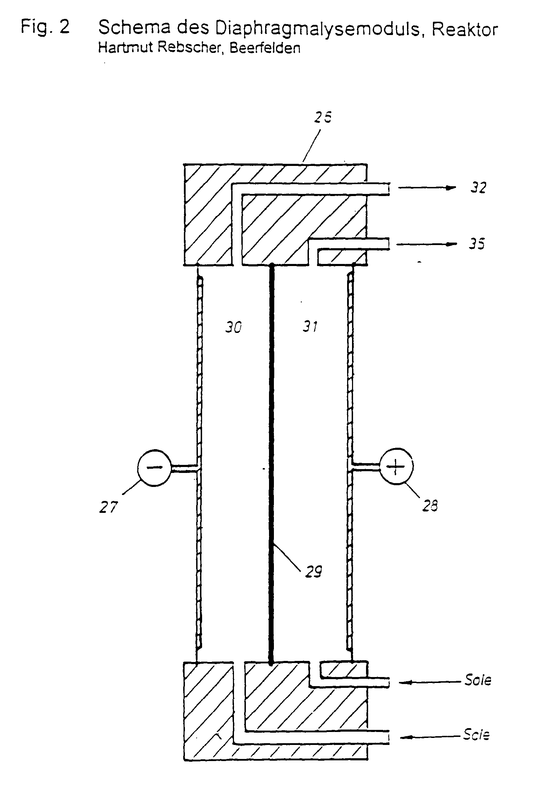

Durch die von dem Diaphragma 29 hermetisch voneinander getrennten beiden Kammern 30, und 31 wird ein Gemisch aus Salz (NaCI) und Wasser (H₂O) als Sole geleitet. (Fig 2)

Das Anolyt aus dem Reaktor 26 wird über eine Leitung 32 einem Steuerungsbehälter 33 mit einem Min / Max. Niveauschalter 37,38 zugeführt und gelangt von hier über eine Dosierpumpe 32 zur Dosierstelle 8.
Das Katholyt aus dem Reaktor 26 wird über eine Leitung 35 einem Steuerungsbehälter 36 mit einem Min / Max. Niveauschalter zugeführt und gelangt von hier über eine Dosierpumpe 37 zur Dosierstelle 6.

Für die Steuerung und Regelung und Kontrolle der gesamten Anlage dient eine elektrische Zentralsteuerung 39 über die auch die Anolyt- und Katholytzufuhr zur Aufbereitung des Rohwassers je nach dessen Verschmutzungsgrad geregelt wird.

Zur Produktion der Anolyt- und Katholytlösungen wird gereinigtes Wasser aus dem gleichen Kreislauf des aufzubereitenden Rohwassers entnommen.

## Patentansprüche

1. Wasseraufbereitungsanlage zur Erzeugung von trinkbarem Wasser aus verschmutztem Rohwasser, mit einem Zulauf für das Rohwasser, mit einer Filteranlage bestehend aus mehreren Filterstufen und einem Ablauf für das aufbereitete Wasser, wobei das aufzubereitende Wasser über Saug- und Druckpumpen gefördert wird,
**dadurch gekennzeichnet,**
**dass** der Wasseraufbereitungsanlage (1) eine Diaphragmalysezelle, Reaktor (26) genannt, zur Erzeugung der Katholytreinigungs- und Anolytdesinfektionslösung zugeordnet ist.,
**dass** nach der ersten Filterstufe (2) dem Rohwasser die in dem Reaktor (26) erzeugte alkalische Katholytlösung über eine Dosierstelle (6) dosiert zugeführt wird,
**dass** nach der zweiten Filterstufe (7) dem so vorbehandelten Rohwasser die in dem Reaktor (26) erzeugte saure Anolytlösung über eine Dosierstelle (8) bedarfsgerecht dosiert zugeführt wird.
**dass** in der Anlage (1) ein Mischbehälter (19) vorgesehen ist, in dem das Wasser im Gegenstrom mit der im Solebehälter (22) erzeugten gesättigten Solelösung vermischt wird,
und **dass** der Reaktor (26) aus einer Kathode (27), einer Anode (28) und einem Diaphragma (29) (Membrane ) besteht, dass durch die zwei hermetisch voneinander getrennten Kammern (30,31) ein Gemisch aus Salz (NaCI) und Wasser (H20) als Sole fließt.

2. Wasseraufbereitungsanlage nach Anspruch 1,
**dadurch gekennzeichnet,**
**dass** der Dosierstelle (8) ausgangsseitig ein Wassermesser mit Kontaktgeber (10) für die Mengenkontrolle und die automatische Impulssteuerung für die Anolytdosierung nachgeordnet ist.

3. Wasseraufbreitungsanlage nach Anspruch 1,
**dadurch gekennzeichnet,**
**dass** eine zusätzliche, automatische Chlormesssonde (11) vorgesehen ist, die bei einem Überschuß an Chloranteile die Anolytmenge reduziert.

4. Wasseraufbereitungsanlage nach Anspruch 1,
**dadurch gekennzeichnet,**
**dass** eine pH Messsonde (12) vorgesehen ist, die die Anlage (1) bei Unterschreitung des neutralen pH-Wertes von 6,5 abschaltet.

5. Wasseraufbereitungsanlage nach Anspruch 1,
**dadurch gekennzeichnet,**
**dass** eine Redox Messsonde (13) vorgesehen ist, die das aufbereitete Wasser nach dem Entkeimungsgrad kontrolliert und bei Unterschreitung des voreingestellten Wertes einen Alarm auslöst.

6. Wasseraufbereitungsanlage nach Anspruch 1,
**dadurch gekennzeichnet,**
**dass** ein Leitwertsensor (14) vorgesehen ist, der das aufbereitete Wasser nach dem Salzgehalt kontrolliert und einen Alarm auslöst bei Überschreitung des voreingestellten Wertes.

7. Wasseraufbereitungsanlage nach Anspruch 1,
**dadurch gekennzeichnet,**
**dass** das dem Reaktor (26) zugeführte Wasser zur Anolyt/Katholytproduktion durch die erste Filterstufe (2) und durch die zweite Filterstufe (7) vorgereinigt ist.

8. Wasseraufbereitungsanlage nach Anspruch 1,
**dadurch gekennzeichnet,**
**dass** das dem Reaktor (26) zugeführte Wasser zur Anolyt-/ Katholytproduktion während dem Betriebszustand durch die Vorbehandlung der Katholytdosierung (6) und Anolytdosierung (8) bereits gereinigt und desinfiziert zur Anwendung kommt.

9. Wasseraufbereitungsanlage nach Anspruch 1,
**dadurch gekennzeichnet,**
**dass** das dem Reaktor (26) zugeführte Wasser zur Anolyt- und Katholytproduktion durch einen lonenaustauscher (15) enthärtet wird.

10. Wasseraufbereitungsanlage nach Anspruch 1,
**dadurch gekennzeichnet,**
**dass** die Dosierung der Katholytlösung und der Anolytlösung über separate Dosierpumpen (34,57) erfolgt.

11. Wasseraufbereitungsanlage nach Anspruch 1,
**dadurch gekennzeichnet,**
**dass** der Durchfluß der Wasser-Soleflüssigkeit am Reaktor (26) über einen Strömungswächter (18) kontrolliert und nach längerem Ausbleiben der Strömung die Soledosierpumpe (21) und die am Reaktor (26) anliegende Spannung abgeschaltet wird.

12. Wasseraufbereitungsanlage nach Anspruch 1
**dadurch gekennzeichnet,**
**dass** die Steuerung der Anolyt- und Katholytproduktion über einen Druckminderer (16) und ein Magnetventil (17) erfolgt, der die Wasserzufuhr zum Sole-Wasser-Mischbehälter (19) ein bzw, abschaltet.

13. Wasseraufbereitungsanlage nach Anspruch 1,
**dadurch gekennzeichnet,**
**dass** bei mobilen Anlagen (1) die Anolyt- und Katholytzufuhr über Steuerungsbehälter (33,36) mit einem Minimal-(37), Maximal-(38), Meldesensoren erfolgt.

14. Wasseraufbereitungsanlage nach Anspruch 1,
**dadurch gekennzeichnet,**
**dass** die Anlage (1) einen modularen Aufbau aufweist und vorzugsweise jeweils aus folgenden Modulen besteht:
Ansaugfilter, erste Filterstufe (2),
Saug- und Druckerhöhungspumpe (5),
Filtrationsmodul, zweite Filterstufe (7),
Enthärtungsmodul mit lonenaustauscher (15),
Diaphragmalysemodul mit Reaktor (26) und
elektrische Zentralsteuerung (39).

15. Wasseraufbereitungsanlage nach Anspruch 1,
**dadurch gekennzeichnet,**
**dass** aus dem gleichen Kreislauf des zu behandelnden Rohwassers auch das Wasser zur Produktion der Reinigungs- und Desinfektionslösungen , Katholyt und Anolyt, entnommen wird.

16. Wasseraufbereitungsanlage nach Anspruch 1
**dadurch gekennzeichnet,**
**dass** der Natriumchlorid Solebehälter (22) gleichzeitig zur Versorgung des Entkalkers bzw. lonenaustauschers (15) und zur Versorgung der Diaphragmalysezelle (26) zur Anolyt- Katholytherstellung dient.
